# FASCICULE DE BREVET EUROPEEN

(11) **EP 1 417 521 B1**
(45) Date de publication et mention de la délivrance du brevet: **14.12.2005**
(21) Numéro de dépôt: 01976412.5
(22) Date de dépôt: 12.10.2001
(51) Int. Cl.: G02B 6/124

(54) **FILTRES OPTIQUES, LEUR PROCEDE DE FABRICATION ET LEUR UTILISATION POUR UN SYSTEME MULTIPLEX**
OPTISCHE FILTER, IHRE HERSTELLUNGSVERFAHREN UND IHRE ANWENDUNG FÜR EIN MULTIPLEXSYSTEM
OPTICAL FILTERS, METHOD FOR MAKING SAME AND USE THEREOF FOR A MULTIPLEX SYSTEM

(30) Priorité: 13.10.2000 FR 0013122; 27.10.2000 FR 0013869; 27.10.2000 FR 0013870
(43) Date de publication de la demande: 12.05.2004
(73) Titulaire: COMPAGNIE INDUSTRIELLE DES LASERS CILAS, 45100 Orléans (FR)
(72) Inventeur: CHAZALLET, Frédéric, F-13013 Marseille (FR)
(74) Mandataire: Bonnetat, Christian
(86) Numéro de dépôt international: PCT/FR2001/003159
(87) Numéro de publication internationale: WO 2002/031551

(56) Documents cités:
- EP-A- 0 508 970
- EP-A- 1 096 274
- WO-A-97/44686
- US-A- 3 868 589
- US-A- 3 970 959
- US-A- 4 496 216
- US-A- 5 157 537
- US-A- 5 216 680
- US-A- 5 245 596
- US-A- 5 369 722
- US-A- 5 434 708
- US-A- 5 892 230
- US-A- 6 035 089
- US-A- 6 064 685
- PATENT ABSTRACTS OF JAPAN vol. 2000, no. 13, 5 février 2001 (2001-02-05) -& JP 2000 275415 A (OSAKA PREFECTURE;JAPAN SCIENCE & TECHNOLOGY CORP), 6 octobre 2000 (2000-10-06)
- PATENT ABSTRACTS OF JAPAN vol. 013, no. 294 (P-894), 7 juillet 1989 (1989-07-07) -& JP 01 076005 A (RICOH CO LTD), 22 mars 1989 (1989-03-22)
- PATENT ABSTRACTS OF JAPAN vol. 2000, no. 02, 29 février 2000 (2000-02-29) -& JP 11 311709 A (MATSUSHITA ELECTRIC IND CO LTD), 9 novembre 1999 (1999-11-09)
- YOSHINO K ET AL: "Mechanical tuning of the optical properties of plastic opal as a photonic crystal" JAPANESE JOURNAL OF APPLIED PHYSICS, PUBLICATION OFFICE JAPANESE JOURNAL OF APPLIED PHYSICS. TOKYO, JP, vol. 38, no. 7A, PART 2, 1 juillet 1999 (1999-07-01), pages L786-L788, XP002180777 ISSN: 0021-4922
- KUSHWAHA M S ET AL: "Band-gap engineering in two-dimensional periodic photonic crystals" JOURNAL OF APPLIED PHYSICS, AMERICAN INSTITUTE OF PHYSICS. NEW YORK, US, vol. 88, no. 5, 1 septembre 2000 (2000-09-01), pages 2877-2884, XP002180778 ISSN: 0021-8979

## Description

La présente invention est relative à un filtre optique, à son procédé de fabrication et à son utilisation pour un système multiplex optique à division de longueur d'onde.

Le domaine technique de l'invention est celui de la fabrication de systèmes de télécommunications par fibres optiques.

Afin d'accroître la capacité de transport de réseaux câblés à fibre optique, il est connu de multiplexer plusieurs canaux pour les faire transiter simultanément dans une fibre, puis de les démultiplexer ; lorsque le multiplexage est effectué par division de la bande de transmission (en longueur d'onde) de la fibre, on parle généralement de système WDM pour « Wavelenght Division Multiplex » ; afin d'augmenter le nombre de canaux susceptibles d'être multiplexés pour accroître la capacité d'une fibre en restant dans une plage de longueur d'onde déterminée, il faut disposer d'un multiplexeur (et d'un démultiplexeur) susceptible de traiter (mélanger ou séparer) plusieurs faisceaux dont les longueurs d'onde sont très voisines ; on a donc besoin de composants optiques de filtration ayant une bande passante très étroite (de l'ordre de 10⁻⁹ mètres) et un taux de réjection très élevé ; on a également besoin de tels composants qui soient commutables.

Il a été proposé dans le brevet US 5,355,237 un dispositif multiplexeur comportant plusieurs guides d'onde d'entrée, un réseau diffractant s'étendant le long d'une courbe concave, et un guide d'onde de sortie dont une face est couplée à une fibre optique ; le dispositif comporte des diodes laser, qui s'étendent orthogonalement à l'axe de la fibre, et à chacune desquelles est associé un réseau de diffraction de surface adapté à la longueur d'onde de la diode ; dans le cas d'un démultiplexeur, les diodes laser et leurs réseaux de diffraction associés sont remplacés par des photodiodes ; le réseau diffractant courbe est réalisé par lithographie à faisceau d'électrons, sous la forme d'un chenal étroit s'étendant en dent de scie le long d'un contour courbe ; les inconvénients de ce type de dispositif optique sont leur coût élevé, leur rendement médiocre et leur forte sensibilité à la température et à la polarisation du faisceau incident.

Le brevet US 5,216,680 expose une méthode mathématique d'analyse de phénomènes de résonance dans un guide d'onde et suggère d'en appliquer les résultats à la conception d'un filtre optique résonnant pour laser, sans toutefois décrire le filtre ; le brevet US 6,035, 089 expose que cette méthode peut être utilisée pour concevoir un filtre constitué de bandes creusées dans un guide d'onde supporté par un substrat, puis rempli d'un matériau propre à obtenir une structure résonnante, en particulier à 533,4 nm.

Il est par ailleurs connu de réaliser des filtres optiques (passe-bande en transmission) par empilement de nombreuses couches minces d'épaisseur et d'indice de réfraction déterminé, pour transmettre une longueur d'onde déterminée.

Il est également connu de réaliser des filtres de Bragg photo-inscrits dans une fibre ; ces filtres fonctionnent en réflexion.

La présente invention a pour objet de proposer un filtre optique amélioré, un multiplexeur (et un démultiplexeur) incorporant ce filtre, et son procédé de fabrication.

Un objectif de l'invention est de remédier, en partie au moins, aux inconvénients des filtres optiques connus et de leurs procédés de fabrication.

Selon un aspect de l'invention, on utilise des structures résonnantes à une longueur d'onde déterminée et sous une incidence déterminée ; une résonance est obtenue par la construction d'un réseau de motifs à la surface et le cas échéant dans l'épaisseur d'au moins un guide d'onde constitué par une couche mince ou un empilement de couches minces ; la résonance résulte d'un couplage électromagnétique par le réseau entre une onde incidente sensiblement selon la normale à la surface du guide d'onde (et/ou des couches minces), et un mode guidé du guide d'onde : la résonance est observée lorsque des fréquences temporelle et spatiale de l'onde incidente sont sensiblement égales à celles correspondant à un mode propre de la structure ; à cet effet, on prévoit généralement des motifs dont les dimensions et l'espacement sont voisins de la longueur d'onde désirée, et généralement inférieurs à celle-ci.

Selon un autre aspect de l'invention, ladite structure et/ou ledit réseau est bipériodique ou pluripériodique : elle (il) comporte une pluralité de premiers motifs identiques, régulièrement espacés selon deux directions parallèles au guide d'onde, et selon un premier pas ; elle (il) comporte en outre une pluralité de deuxièmes motifs identiques qui sont régulièrement espacés selon lesdites directions et selon ledit premier pas, qui sont disposés imbriqués avec lesdits premiers motifs et qui sont de forme, de configuration et/ou de dimensions différentes de celles des premiers motifs. Ainsi, lesdits premiers motifs forment un premier « sous-réseau » qui est imbriqué avec un second « sous-réseau » constitué par lesdits seconds motifs.

Généralement, et en conséquence de cette imbrication, un premier motif et un second motif adjacent au premier motif seront séparés d'une distance égale à la moitié dudit pas ; dans un mode préféré de réalisation, le réseau résonnant peut comporter plus de deux sous-réseaux, en particulier 3 ou 4 sous-réseaux imbriqués pour former le réseau pluripériodique (ou multipériodique).

Une telle structure permet d'assurer un filtrage passe-bande en réflexion, qui est doté d'un taux de réjection élevé et qui permet une inclinaison (généralement de faible valeur) de l'onde incidente par rapport à la normale à la surface des couches minces du guide d'onde, cette inclinaison étant souhaitable pour séparer le faisceau réfléchi du faisceau incident, sans nécessiter l'usage d'une lame semi-réfléchissante ou d'un système interférentiel.

Une telle structure permet d'obtenir des performances améliorées pour des variations de l'angle d'incidence, de l'angle d'ouverture, ou de polarisation du faisceau incident.

Selon un autre aspect de l'invention, on utilise un composant optique comportant plusieurs couches minces superposées sur un substrat et incorporant deux telles structures résonnantes, qui sont de préférence disposées symétriquement par rapport à un plan médian, et qui sont identiques et/ou résonnantes à la même longueur d'onde ; on obtient ainsi un filtre passif passe-bande en transmission qui est doté d'un taux de réjection élevé, et qui est simple à fabriquer.

Un réseau de motifs saillants en forme de plots peut être obtenu par gravure d'une couche mince par un faisceau d'électrons et/ou par microlithographie (ou procédé équivalent).

Selon une variante de réalisation de l'invention, chacun des motifs est constitué d'une (ou comporte une) région de couche mince dont l'indice est modifié localement par l'implantation d'ions dans la couche mince ; cette implantation est obtenue en soumettant la couche mince à un bombardement ionique, par un faisceau d'ions délivré par un accélérateur de particules, un canon à ions et/ou un implanteur ionique.

Cette opération d'implantation fait appel à une technique connue notamment pour doper un matériau semi-conducteur avec des matériaux dopants. Pour l'application de cette technique à l'invention, on utilisera généralement comme matériau dopant un matériau choisi parmi l'erbium, le niobium, le titane, le silicium, le phosphore ou le germanium.

Afin de doper seulement certaines régions de la couche mince pour former les motifs dopés, on utilise de préférence une technique de masquage de la couche mince telle que celle utilisée pour la gravure : on recouvre la couche mince à doper d'un masque "perforé" de forme complémentaire à celle du réseau de motifs à former ; le masque empêche ainsi que les parties de la couche mince qu'il recouvre ne soient soumises au flux ionique ; il permet donc la préservation, dans la couche mince qu'il recouvre, de zones non dopées entourant les régions dopées.

Par ailleurs, en faisant varier l'intensité et/ou la durée d'exposition des parties non masquées de la couche mince au faisceau d'ions, on peut faire varier la configuration ionique des motifs dopés, en particulier la densité volumique d'ions implantés et/ou la profondeur d'implantation, afin d'obtenir une configuration de forme (profil) et/ou d'indice déterminé.

On peut en outre procéder à un recuit de structure après dopage pour modifier, de façon contrôlée, par migration des ions dans la couche mince, le gradient d'indice et/ou de population ionique dans les motifs dopés.

La réalisation d'un composant incorporant deux réseaux résonnants peut être effectuée en gravant (ou en implantant) les deux réseaux sur deux portions d'une couche mince reposant sur un substrat commun ; le substrat peut ensuite être coupé en deux parties qui peuvent être assemblées pour former le composant ; l'assemblage peut être effectué par mise en contact des deux parties par la face sur laquelle est prévu le réseau ; cet assemblage peut être obtenu par adhésion moléculaire ; alternativement les deux parties peuvent être assemblées par leurs portions respectives du substrat, le cas échéant par collage.

Selon une variante de réalisation, on peut réaliser une gravure (ou un dopage) à la surface de chacun de deux empilements de couches minces prévues sur chacune des deux faces d'un substrat commun aux deux empilements.

De préférence le réseau est gravé (ou implanté) dans une structure anti-reflet comportant au moins une couche mince.

Des performances améliorées (bande étroite et réjection élevée) sont obtenues en formant (en gravant ou en implantant) les motifs de chaque réseau dans une couche (dite externe) d'indice (par exemple voisin de 1,5) inférieur à celui (par exemple voisin de 2) de la couche sur laquelle la couche externe est déposée , ce qui conduit à une structure anti-reflet.

En outre, l'utilisation de motifs gravés de contour circulaire et/ou dotés de faces latérales inclinées par rapport à la normale aux couches minces améliore la tenue à l'ouverture ; de façon similaire l'utilisation de motifs dopés de contour circulaire et/ou dotés d'un profil d'implantation et/ou d'indice incliné par rapport à cette normale présente un avantage de même nature.

Pour augmenter le taux de réjection du filtre optique obtenu, on peut également prévoir plusieurs réseaux résonnants superposés.

Les composants selon l'invention présentent l'avantage de nécessiter un nombre réduit de couches minces, par comparaison avec des filtres à couches minces habituels.

En outre, ils permettent d'obtenir des filtres plus étroits qui sont donc mieux adaptés à la division d'une bande de transmission en un grand nombre de canaux. En pratique deux ou trois couches minces peuvent suffire pour construire un filtre passe-bande ayant un taux de réjection élevé pour les longueurs d'onde éloignées de la longueur d'onde sur laquelle est centré le filtre, ayant une largeur spectrale inférieure à un nanomètre et réfléchissant ou transmettant environ 100 % du faisceau incident - en dehors de la bande passante -, même lorsque le faisceau incident est doté d'une incidence (par rapport à la normale) pouvant atteindre plusieurs degrés et/ou d'une ouverture de quelques mrd, en particulier de 5 à 20 mrd.

Du fait que la position de la longueur d'onde centrale est essentiellement déterminée par la géométrie du réseau qui s'étend sur la (les) face(s) externe(s) du composant, il est facile de décaler et/ou d'ajuster la longueur d'onde centrale après réalisation du réseau : ce décalage peut en particulier être obtenu en recouvrant le réseau d'une couche mince d'indice et d'épaisseur adaptés, ou bien en modifiant la géométrie du réseau, par exemple par une étape postérieure de gravure par faisceau d'électrons.

Les couches minces (inactives) peuvent être réalisées par dépôt d'un matériau choisi parmi des métaux tels que Al, Ni, Ag, Au, des oxydes tels que TiO₂, SiO₂, Ta₂O₅, des fluorures (tels que MgF₂), des sulfures (tels que ZₙS) ou des nitrures ; chaque couche mince a une épaisseur allant généralement de 10 nm à 10µm ; l'épaisseur de la couche mince recouvrant le réseau pour décaler la longueur d'onde centrale pourra être inférieure à ces valeurs : elle peut aller de 1 à 10 nm (nanomètre).

Par comparaison, le substrat a une épaisseur plus élevée, par exemple de l'ordre de 0,5 mm à 1 mm ; il est constitué d'un matériau transparent pour les longueurs d'ondes considérées, en particulier les longueurs d'ondes voisines de 1,5 µm, tel que du verre ou de la silice.

La gravure du réseau peut être obtenue par diverses techniques , telles que la technique de gravure sèche, de gravure humide, de gravure réactive, de gravure par faisceau ionique, le cas échéant assistée chimiquement.

Selon un autre aspect de l'invention, on propose un filtre à couches minces dans lequel au moins une des couches minces, dite couche active, est réalisée dans un matériau non amorphe ; l'indice et/ou la géométrie de cette couche peut donc être substantiellement modifiée de façon réversible, lorsqu'elle est placée dans un champ électrique, notamment lorsqu'elle est traversée par un courant électrique.

Ledit matériau est en outre transparent aux longueurs d'onde de travail, en particulier dans le domaine infrarouge, notamment aux longueurs d'onde voisines de 1,5 micron.

Grâce à cet aspect de l'invention, en appliquant une tension électrique à deux bornes du composant, on peut modifier les caractéristiques du filtre, grâce aux propriétés piézoélectriques, photoélectriques et/ou photo réfractives du matériau constituant la couche active.

Le matériau constitutif de ladite couche active peut être essentiellement cristallin ; cependant, dans de nombreux cas, ce matériau est partiellement cristallin.

Bien que ce matériau puisse avoir des propriétés des matériaux conducteurs ou semi-conducteurs, il aura dans de nombreux cas des propriétés des matériaux électriquement isolants.

Ladite couche mince active peut en particulier être réalisée par dépôt d'un matériau choisi parmi LiNbO₃, BaTiO₃, ZnO ; cette couche peut également être réalisée par dépôt d'autre matériaux habituellement utilisés pour la fabrication de couches minces ; cependant, afin de ne pas obtenir une structure amorphe résultant des techniques habituelles de dépôt de ces matériaux, il est nécessaire de modifier le procédé de dépôt pour obtenir une couche partiellement cristalline ; en particulier lorsqu'on utilise du Ta₂O₅, on peut provoquer le dépôt à une température supérieure à la température habituelle ; on peut notamment opérer à une température située dans une plage allant de 200 ou 300°C jusqu'à 800 ou 900°C, plutôt que d'opérer aux températures habituelles qui sont généralement inférieures ou égales à 100°C.

Afin d'éviter le dépôt d'une couche mince amorphe, on peut également augmenter l'énergie du faisceau d'ions ou d'électrons utilisé pour l'"évaporation" du matériau à déposer, afin de favoriser l'arrachement de macro-structures cristallines et leur dépôt sur le substrat.

Selon un premier mode préféré de réalisation, ladite couche active partiellement au moins cristalline, est celle dans laquelle sont formés les motifs du réseau ; ainsi, la modification de faible amplitude, de l'indice et/ou des dimensions de cette couche provoque un déplacement de la fréquence centrale du filtre.

Selon un deuxième mode préféré de réalisation, le filtre a couches minces peut comporter deux couches minces actives s'étendant de part et d'autre d'une troisième couche mince inactive dans laquelle sont formés les motifs du réseau résonnant ; dans ce cas notamment, les couches actives peuvent être constitués d'ITO modifié pour obtenir une transparence aux longueurs d'ondes voisines de 1,55 µm.

Du fait que les filtres à couches minces selon l'invention peuvent être commandés électriquement de façon à modifier leurs caractéristiques optiques, ils peuvent notamment être utilisés pour constituer des systèmes optiques de traitement d'informations de type "add-and-drop" et des systèmes optiques de commutation de type "cross-connect".

Les caractéristiques particulières des filtres actifs selon l'invention permettent leur utilisation pour des applications nécessitant une fréquence élevée ; le changement d'état (et des caractéristiques) de la couche mince active peut en effet être effectué à des fréquences de l'ordre de 1 MHz à 10 GHz.

D'autres avantages et caractéristiques de l'invention seront compris au travers de la description suivante qui se réfère aux dessins annexés, qui illustrent sans aucun caractère limitatif des modes préférentiels de réalisation de l'invention.
La figure 1 est une vue schématique en perspective d'une partie d'un composant comportant un réseau gravé, selon un premier mode de réalisation.
La figure 2 est une vue schématique en coupe transversale d'une partie d'un composant comportant un réseau gravé, selon un deuxième mode de réalisation.
La figure 3 est une vue en plan schématique d'un démultiplexeur huit voies intégrant des filtres passe-bande en transmission selon l'invention.
La figure 4 est une vue en perspective schématique d'une ébauche de composant, avant sa découpe.
La figure 5 est une vue schématique en coupe par un plan transversal aux plans des couches, qui montre un plot d'un réseau gravé dont les flancs sont inclinés.
La figure 6 est une vue en plan schématique d'un démultiplexeur à quatre voies incorporant quatre composants comportant un réseau gravé, formant des filtres passe-bande en réflexion.
La figure 7 illustre en vue en plan l'arrangement des plots ou motifs de contour carré d'un réseau gravé ou dopé pluripériodique.
Les figures 8 et 9 illustrent les performances d'un filtre constitué d'une couche mince déposée sur un substrat et sur laquelle est formé le réseau de la figure 7.
La figure 10 est une vue schématique en perspective d'une partie d'un composant comportant un réseau de motifs dopés, selon un premier mode de réalisation.
La figure 11 est une vue schématique en coupe transversale d'une partie d'un composant comportant un réseau de motifs dopés, selon un deuxième mode de réalisation.
La figure 12 est une vue en plan schématique d'un démultiplexeur huit voies intégrant des filtres passe-bande en transmission selon l'invention.
La figure 13 est une vue schématique en coupe par un plan transversal aux plans des couches, qui montre un motif dopé d'un réseau dont le profil transversal d'indice est incliné et incurvé.
La figure 14 est une vue en plan schématique d'un démultiplexeur à quatre voies incorporant quatre composants comportant un réseau de motifs dopés, formant des filtres passe-bande en réflexion.
La figure 15 est une vue schématique en perspective d'une partie d'un composant selon un premier mode de réalisation, qui comporte deux couches actives symétriques par rapport à un plan médian, dans chacune desquelles un réseau a été formé par dopage.
La figure 16 est une vue schématique en coupe transversale d'une partie d'un composant actif selon un deuxième mode de réalisation, dans lequel les motifs de chaque réseau sont gravés.
La figure 17 est une vue schématique en coupe par un plan transversal aux plans des couches, qui montre un motif dopé d'un réseau dont le profil transversal d'indice est incliné et incurvé.
La figure 18 est un graphe illustrant un spectre de difraction de rayons X par une couche mince active de structure partiellement cristalline et partiellement amorphe.
La figure 19 est une vue en plan schématique d'un système utilisant neuf filtres actifs fonctionnant en réflexion pour diriger sélectivement (et le cas échéant mélanger) en fonction de signaux électriques de commande, trois voies d'entrée (E) vers trois voies de sortie (S).

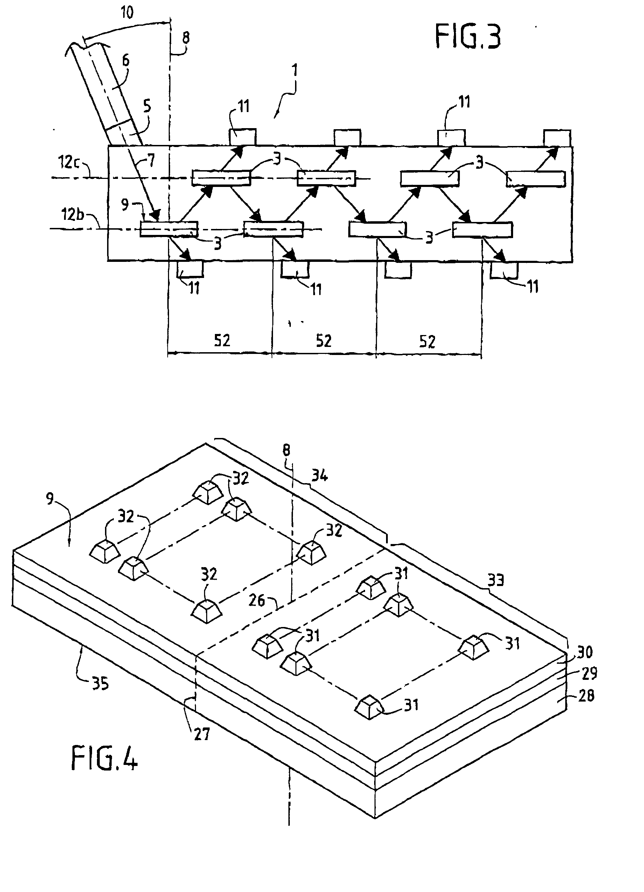

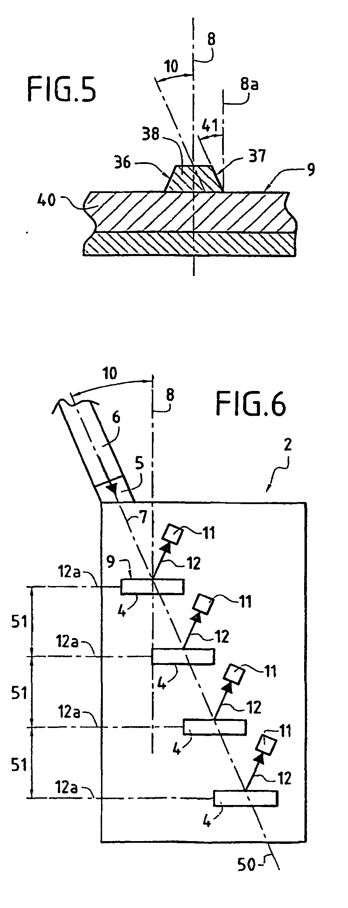

Par référence aux figures 3 et 6, le démultiplexeur 1, 2 comporte huit filtres 3 (respectivement quatre filtres 4) passe-bande centrés sur huit (respectivement quatre) longueurs d'ondes différentes correspondant aux huit (respectivement quatre) canaux à séparer.

Le démultiplexeur comporte une interface 5 de couplage optique avec une fibre optique 6 transportant le rayonnement à diviser ; le faisceau incident 7 délivré par la fibre forme avec la normale 8 à la face 9 du filtre un angle 10 d'incidence, dont la valeur est la plus faible possible afin de limiter les perturbations susceptibles d'en résulter.

Le démultiplexeur 2 figure 6 comporte quatre collimateurs 11 de sortie respectivement associés aux quatre filtres 4, qui servent à diriger vers un capteur (tel qu'une photodiode) - non représenté - la partie 12 du faisceau incident 7 correspond à la longueur d'onde associée au canal correspondant.

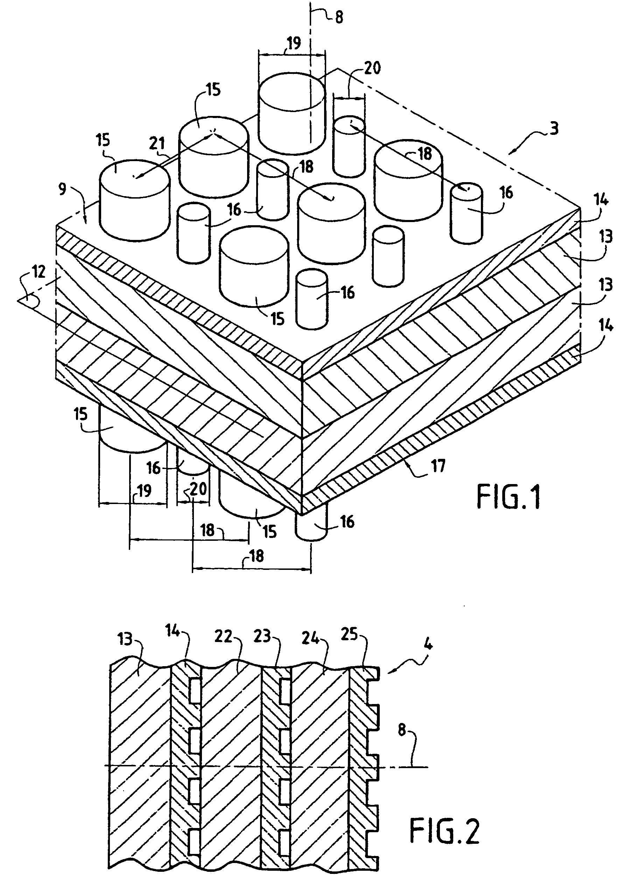

De façon similaire, le démultiplexeur 1 figure 3 comporte huit collimateurs 11 de sortie ; chaque démultiplexeur 1, 2 peut comporter un collimateur d'entrée intégré pour limiter l'ouverture du faisceau incident 7 en provenance de la fibre. Les filtres 3 et 4 ont une structure de plaque telle que celle respectivement illustrée figures 1 et 2.

Le filtre 3 figure 1 s'étend selon une symétrie par rapport à son plan 12 médian : il comporte, de part et d'autre de ce plan, un substrat 13 recouvert d'une couche mince 14 dans une partie de l'épaisseur de laquelle ont été formés par gravure des plots 15, 16 formant un réseau résonnant.

Ce réseau comporte d'une part une pluralité de premiers plots 15, de forme cylindrique selon des axes parallèles à la normale 8 à la face externe supérieure 9 et à la face externe inférieure 17 du composant 3, et de section transversale (ou contour) circulaire ; le réseau comporte d'autre part une pluralité de deuxième plots 16 de forme également cylindrique et parallèle à la normale 8 au plan 12.

Les plots 15 sont de forme et de dimension identiques et sont régulièrement espacés selon deux directions orthogonales perpendiculaires à la normale 8 pour former un premier maillage carré.

Les plots 16 sont également de forme et de dimension identiques et sont espacés selon lesdites directions orthogonales perpendiculaires à la normale 8 pour former un deuxième maillage carré, qui est imbriqué avec le premier maillage carré.

Les plots 15, 16 forment ainsi un réseau bipériodique à deux dimensions qui s'étend à la surface de la couche 14.

A cet effet, les pas longitudinaux 21 et transversaux 18 des deux maillages sont identiques et inférieurs à la longueur d'onde de filtrage, mais le diamètre 19, 20 et/ou la hauteur respective des plots 15, 16 est (sont) différent(s).

Le composant 3 comporte ainsi deux réseaux identiques respectivement prévus sur sa face supérieure 9 externe et sur sa face inférieure 17 externe, de façon à former un filtre passe-bande en transmission ; la fréquence (la longueur d'onde) centrale de ce filtre se calcule par les méthodes habituelles en la matière, en fonction des caractéristiques optiques et géométriques des plots 15, 16 et de la couche 14 sur laquelle ces plots sont formés ; cette couche constitue un guide d'ondes doté de ses propres fréquences (temporelle et spatiale) de résonance.

Selon la variante de réalisation illustrée figure 2, le filtre 4 passe-bande en réflexion peut être constitué par plusieurs structures résonnantes empilées selon l'axe 8 (d'incidence normale) qui est perpendiculaire aux faces des couches : ce filtre comporte un substrat 13 recouvert d'une couche mince 14 dans une partie de l'épaisseur de laquelle est gravé un premier réseau résonnant ; une couche 22 formant un substrat (ou écarteur « spacer ») recouvre la couche 14 et est elle-même revêtue d'une couche mince 23 comportant un deuxième réseau résonnant ; une couche 24 similaire à la couche 22 recouvre la couche 23 et est revêtue d'une couche mince 25 comportant un troisième réseau résonnant.

Par référence à la figure 4, un exemple de composant ne faisant pas partie de l'invention peut être obtenu par collage ou adhésion de deux portions obtenues par découpe selon les lignes 26, 27 de l'ébauche illustrée figure 4 ; cette ébauche comporte un substrat 28 recouvert de deux couches minces 29 et 30 ; dans une partie de la couche 30 (ou dans une couche la recouvrant) ont été formés une pluralité de motifs 31, 32 pyramidaux de section carrée, de forme et dimension identiques ; les motifs 31 forment un premier réseau s'étendant dans la première portion 33 de l'ébauche, tandis que les motifs 32 forment un deuxième réseau (de caractéristiques identiques au premier) dans une deuxième portion 34 de l'ébauche de composant.

Les deux portions 33, 34 sont séparables par une coupe selon le plan défini par les lignes 26, 27, et sont ensuite solidarisées par la face 35 de leur substrat 28 respectivement.

Par référence à la figure 5, les faces latérales (ou flancs) 36, 37 du plot 38 d'un réseau formé à la surface 9 de la couche mince 40, sont inclinées, par rapport à une normale 8a à la surface 9, d'un angle 41.

Dans le cas d'un démultiplexeur 2 utilisant des filtres 4 réfléchissants (figure 6), les filtres peuvent être alignés selon l'axe 50, leurs plans 12a respectifs étant disposés parallèlement les uns aux autres et régulièrement espacés d'un pas 51.

Dans le démultiplexeur 1 illustré figure 3, les filtres transmetteurs 3 s'étendent dans deux plans 12b, 12c parallèles et sont régulièrement espacés d'un pas 52.

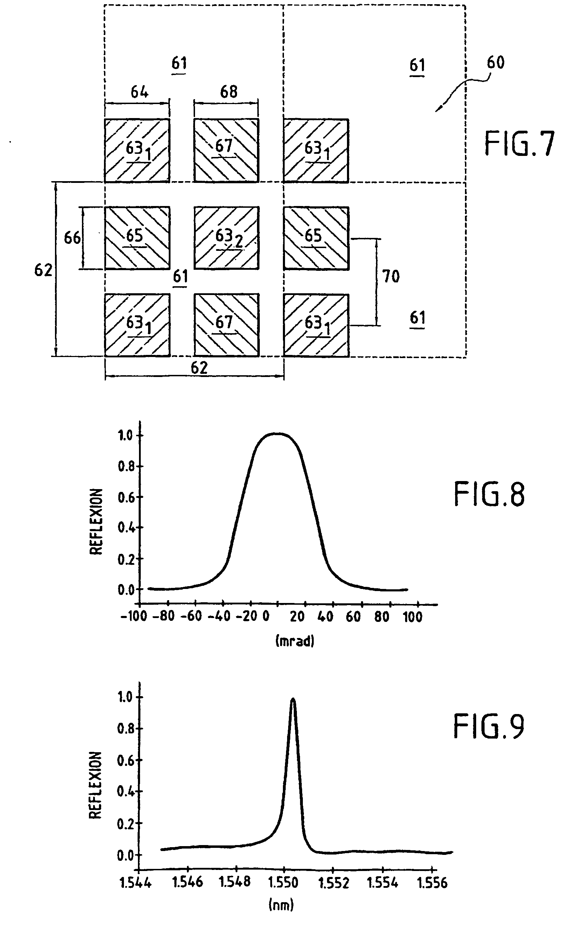

Par référence à la figure 7, le réseau 60 comporte une pluralité de mailles carrées 61 de largeur 62 qui sont disposées côte à côte et s'étendent selon deux directions orthogonales contenues dans le plan de la figure.

Dans chaque maille sont prévus quatre plots de section carrée :
- deux premiers plots 63₁, 63₂ dont la section carrée a un côté de largeur 64,
- un second plot 65 dont la section carrée a un côté de largeur 66,
- un troisième plot 67 dont la section carrée a un côté de largeur 68,
les valeurs desdites largeurs étant différentes tout en étant voisines.

Les plots 63₁ sont régulièrement espacés d'un pas dont la valeur est égale à la largeur 62 de la maille ; les plots 63₂ sont également espacés entre eux du même pas, ainsi que les plots 65 entre eux d'une part et de même que les plots 67 entre eux d'autre part.

Les quatre plots de chaque maille sont disposés de façon à ce que leurs centres respectifs soient disposés au sommet d'un carré dont le côté 70 correspond à la moitié du côté 62 de la maille 61.

En gravant le réseau illustré figure 7 dans une couche de Ta₂O₅ d'indice n= 2,023 (à 1550 nm), et en choisissant les dimensions des plots suivantes : côté 62 = 1010 nm, côté 64 = 202 nm, côté 66 = 236 nm, côté 68 = 337 nm hauteur de chaque plot = 770 nm, épaisseur de la couche subsistante de Ta₂ O₅ = 335 nm, on a obtenu un filtre dont la courbe de réflexion en fonction de l'angle d'incidence du faisceau est illustré figure 8, et dont la courbe de réflexion en fonction de la longueur d'onde est illustrée figure 9.

Les plots gravés 63, 65, 67 peuvent être remplacés par des motifs dopés de forme (contour) et espacement identiques ou similaires.

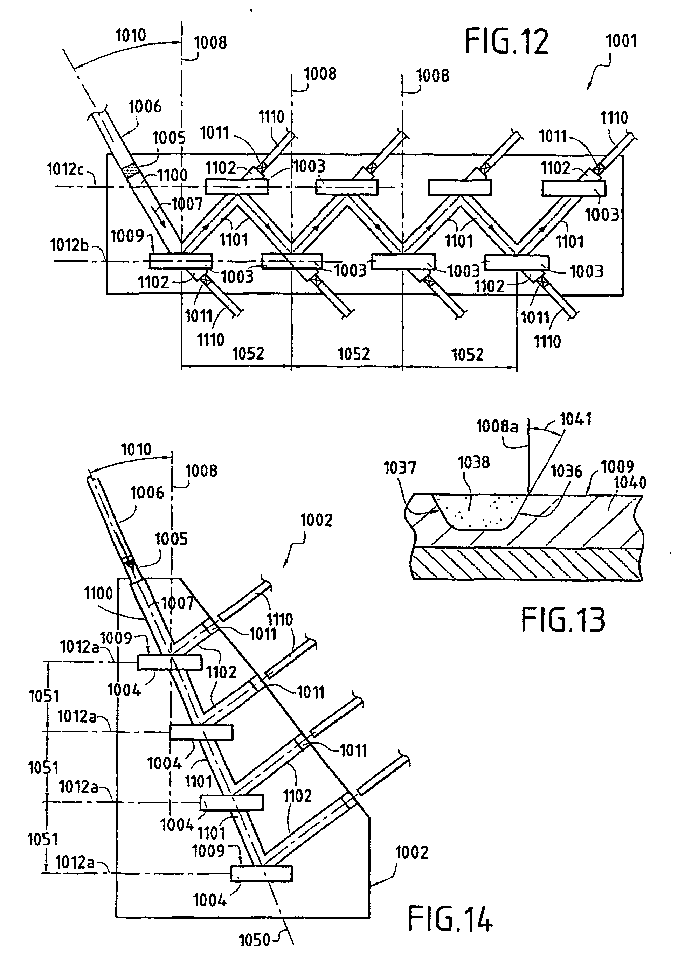

Par référence aux figures 12 et 14, le démultiplexeur 1001, 1002 comporte huit filtres 1003 (respectivement quatre filtres 1004) passe-bande centrés sur huit (respectivement quatre) longueurs d'ondes différentes correspondant aux huit (respectivement quatre) canaux à séparer.

Le démultiplexeur comporte une interface 1005 de couplage optique avec une fibre optique 1006 transportant le rayonnement à diviser ; le faisceau incident 1007 délivré par la fibre 1006 forme avec la normale 1008 à la face 1009 du filtre un angle 1010 d'incidence, dont la valeur est la plus faible possible afin de limiter les perturbations susceptibles d'en résulter.

Le démultiplexeur 1002 figure 14 comporte quatre collimateurs 1011 de sortie respectivement associés aux quatre filtres 1004, qui servent à diriger vers une fibre optique 1110 de sortie la partie du faisceau incident 1007 qui correspond à la longueur d'onde associée au canal correspondant, et qui a été réfléchie par le filtre 1004 correspondant.

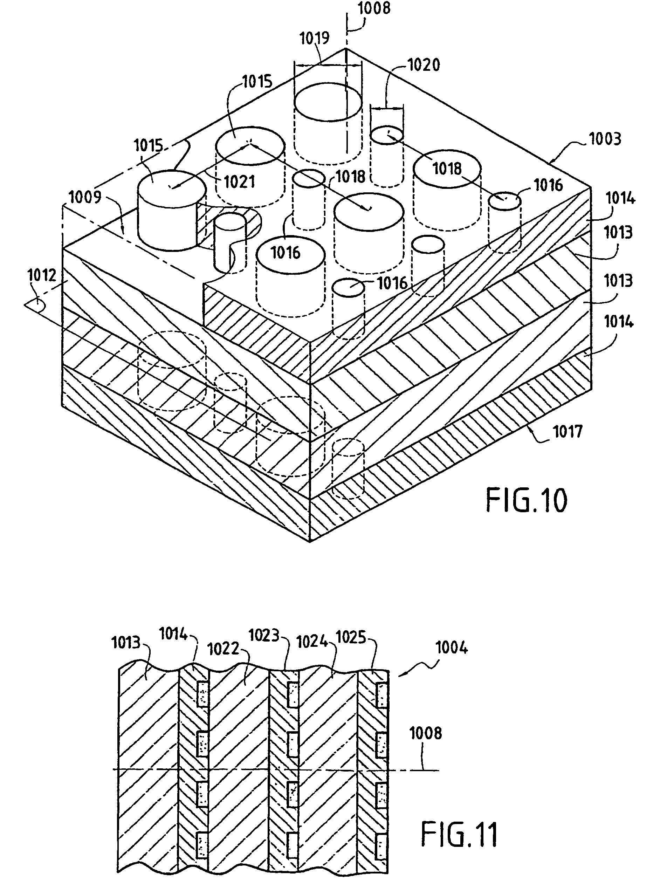

De façon similaire, le démultiplexeur 1001 figure 12 comporte huit collimateurs 1011 de sortie ; chaque démultiplexeur 1001, 1002 peut comporter un collimateur d'entrée intégré pour limiter l'ouverture du faisceau incident 1007 en provenance de la fibre. Les filtres 1003 et 1004 ont une structure de plaque telle que celle respectivement illustrée figures 10 et 11.

Chaque collimateur 1011 de sortie peut être constitué par l'extrémité dopée de la fibre 1110 de sortie correspondante ; l'extrémité de la fibre d'entrée 1006 peut également être dopée pour former un collimateur 1005.

Chaque démultiplexeur 1001, 1002 comporte un guide d'onde d'entrée 1100 qui est formé dans une couche déposée sur un substrat, et qui est prolongé par d'autres guides 1101 ; cette couche est munie de rainures sensiblement transversales à l'axe longitudinal des guides 1100, 1101, chaque rainure recevant un filtre disposé transversalement aux portions de guide d'onde 1100, 1101 ; ainsi la composante spectrale du faisceau 1007 se propageant dans les guides 1100, 1101, qui correspond à la longueur d'onde sur laquelle est centré le filtre, traverse celui-ci dans le cas de la figure 12 ou au contraire est réfléchie par le filtre dans le cas de la figure 14.

Cette composante filtrée est transmise par un guide d'onde 1102 de sortie à la fibre 1110 de sortie ; dans le cas de la figure 14, l'extrémité du guide 1102 est dopée pour former le collimateur 1011 de sortie.

Le filtre 1003 figure 10 s'étend selon une symétrie par rapport à son plan 1012 médian : il comporte, de part et d'autre de ce plan, un substrat 1013 recouvert d'une couche mince 1014 dans l'épaisseur de laquelle ont été formés, par implantation ionique, des motifs dopés 1015, 1016 formant un réseau résonnant.

Ce réseau comporte d'une part une pluralité de premiers motifs 1015, de forme cylindrique selon des axes parallèles à la normale 1008 à la face externe supérieure 1009 et à la face externe inférieure 1017 du composant 1003, et de section transversale (et/ou contour) circulaire ; le réseau comporte d'autre part une pluralité de deuxième motifs 1016 de forme également cylindrique et parallèle à la normale 1008 au plan 1012.

Les motifs 1015 sont de forme et de dimension identiques et sont régulièrement espacés selon deux directions orthogonales perpendiculaires à la normale 1008 pour former un premier maillage carré.

Les motifs 1016 sont également de forme et de dimension identiques et sont espacés selon lesdites directions orthogonales perpendiculaires à la normale 1008 pour former un deuxième maillage carré, qui est imbriqué avec le premier maillage carré.

Les motifs 1015, 1016 forment ainsi un réseau bipériodique à deux dimensions qui s'étend à l'intérieur de la couche 1014.

A cet effet, les pas longitudinaux 1021 et transversaux 1018 des deux maillages sont identiques et inférieurs à la longueur d'onde correspondant à la fréquence centrale de filtrage, mais le diamètre 1019, 1020 et/ou la hauteur respective des motifs 1015, 1016 est (sont) différent(s).

Le composant 1003 comporte ainsi deux réseaux identiques respectivement prévus sur sa face supérieure 1009 externe et sur sa face inférieure 1017 externe, de façon à former un filtre passe-bande en transmission ; la fréquence (la longueur d'onde) centrale de ce filtre se calcule par les méthodes habituelles en la matière, en fonction des caractéristiques optiques et géométriques des motifs 1015, 1016 et de la couche 1014 dans laquelle ces motifs sont formés ; cette couche constitue un guide d'ondes doté de ses propres fréquences (temporelle et spatiale) de résonance.

Selon la variante de réalisation illustrée figure 11, le filtre 1004 passe-bande en réflexion peut être constitué par plusieurs structures résonnantes empilées selon l'axe 1008 (d'incidence normale) qui est perpendiculaire aux faces des couches : ce filtre comporte un substrat 1013 recouvert d'une couche mince 1014 dans l'épaisseur de laquelle est implanté un premier réseau résonnant ; une couche 1022 formant un substrat (ou écarteur « spacer ») recouvre la couche 1014 et est elle-même revêtue d'une couche mince 1023 comportant un deuxième réseau résonnant ; une couche 1024 similaire à la couche 1022 recouvre la couche 1023 et est revêtue d'une couche mince 1025 comportant un troisième réseau résonnant.

Par référence à la figure 13, les faces latérales (ou flancs) 1036, 1037 du motif 1038 d'un réseau formé sous la surface 1009 de la couche mince 1040, sont inclinées, par rapport à une normale 1008a à la surface 1009, d'un angle 1041.

Dans le cas d'un démultiplexeur 1002 utilisant des filtres 1004 réfléchissants (figure 14), les filtres peuvent être alignés selon l'axe 1050, leurs plans 1012a respectifs étant disposés parallèlement les uns aux autres et régulièrement espacés d'un pas 1051.

Dans le démultiplexeur 1001 illustré figure 12, les filtres transmetteurs 1003 s'étendent dans deux plans 1012b, 1012c parallèles et sont régulièrement espacés d'un pas 1052.

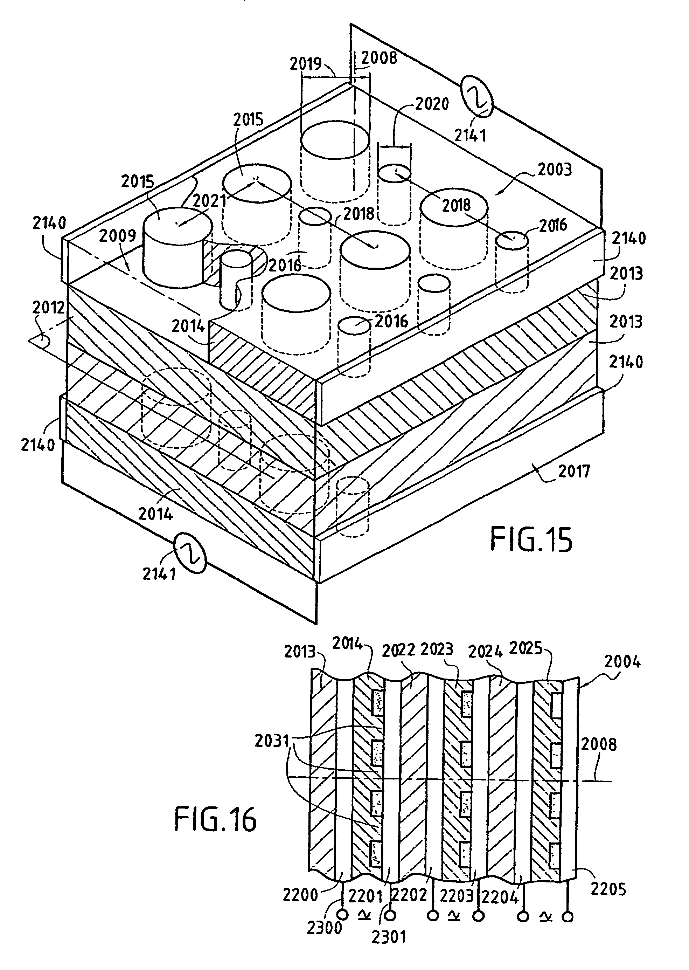

Le filtre 2003 figure 15 s'étend selon une symétrie par rapport à son plan 2012 médian : il comporte, de part et d'autre de ce plan, un substrat 2013 recouvert d'une couche mince 2014 dans l'épaisseur de laquelle ont été formés, par implantation ionique, des motifs dopés 2015, 2016 formant un réseau résonnant.

Ce réseau comporte d'une part une pluralité de premiers motifs 2015, de forme cylindrique selon des axes parallèles à la normale 2008 à la face externe supérieure 2009 et à la face externe inférieure 2017 du composant 2003, et de section transversale (ou contour) circulaire ; le réseau comporte d'autre part une pluralité de deuxièmes motifs 2016 de forme également cylindrique et parallèle à la normale 2008 au plan 2012 et aux couches minces.

Les motifs 2015 sont de forme et de dimension identiques et sont régulièrement espacés selon deux directions orthogonales perpendiculaires à la normale 2008 pour former un premier maillage carré.

Les motifs 2016 sont également de forme et de dimension identiques et sont espacés selon lesdites directions orthogonales perpendiculaires à la normale 2008 pour former un deuxième maillage carré, qui est imbriqué avec le premier maillage carré.

Les motifs 2015, 2016 forment ainsi un réseau bipériodique à deux dimensions qui s'étend à l'intérieur de la couche 2014.

A cet effet, les pas longitudinaux 2021 et transversaux 2018 des deux maillages sont identiques, mais le diamètre 2019, 2020 et/ou la hauteur respective des motifs 2015, 2016 est (sont) différent(s).

Le composant 2003 comporte ainsi deux réseaux identiques respectivement prévus sur sa face supérieure 2009 externe et sur sa face inférieure 2017 externe, de façon à former un filtre passe-bande en transmission ; la fréquence (la longueur d'onde) centrale de ce filtre se calcule par les méthodes habituelles en la matière, en fonction des caractéristiques optiques et géométriques des motifs 2015, 2016 et de la couche 2014 dans laquelle ces motifs sont formés ; cette couche constitue un guide d'ondes doté de ses propres fréquences (temporelle et spatiale) de résonance.

Chacune des deux couches minces 2014 dans lesquelles sont formés les motifs 2015, 2016, est constituée d'un matériau partiellement cristallin doté de propriétés piézoélectriques, photoélectriques et/ou photo réfractives ; chaque couche 2014 est en contact électrique par deux parties opposées de sa tranche avec deux électrodes 2140 respectivement reliées aux deux bornes d'un générateur 2141 de signaux électriques de commande.

Cette construction permet d'appliquer un champ électrique entre lesdites deux parties opposées de la tranche de chaque couche 2014 ; il en résulte une modification des caractéristiques géométriques et/ou optiques de chaque couche 2014, et par conséquent une variation de la fréquence de résonance de la structure résonnante formée dans les couches actives 2014.

Selon la variante de réalisation illustrée figure 16, le filtre 2004 passe-bande en réflexion est constitué par plusieurs structures résonnantes empilées selon l'axe 2008 (d'incidence normale) qui est perpendiculaire aux faces des couches : ce filtre comporte un substrat 2013, ainsi qu'une couche mince 2014 dans une partie de l'épaisseur de laquelle est gravé un premier réseau résonnant.

La couche 2014 s'étend entre deux couches minces actives 2200 et 2201 qui sont respectivement reliées par deux éléments conducteurs (formant électrodes) 2300 et 2301 aux bornes d'une source d'énergie électrique ; lorsque cette source délivre une tension entre ses bornes, cette tension est appliquée aux couches 2200 et 2201 et provoque une modification des caractéristiques de la couche 2014 qu'elles enserrent ; il en résulte une modification des caractéristiques du filtre 2004.

Sur ce premier empilement du filtre 2004 sont prévus deux autres empilements de structure similaire : un deuxième empilement comporte une couche 2022 formant un substrat (ou écarteur « spacer ») et recouvrant la couche 2201, et une couche mince 2023 comportant un deuxième réseau résonnant et prise en sandwich entre deux couches actives 2202 et 2203; un troisième empilement comporte une couche 2024 similaire à la couche 2022 recouvrant la couche 2203, et une couche mince 2025 comportant un troisième réseau résonnant gravé, laquelle couche 2025 s'étend entre deux couches minces actives 2204 et 2205.

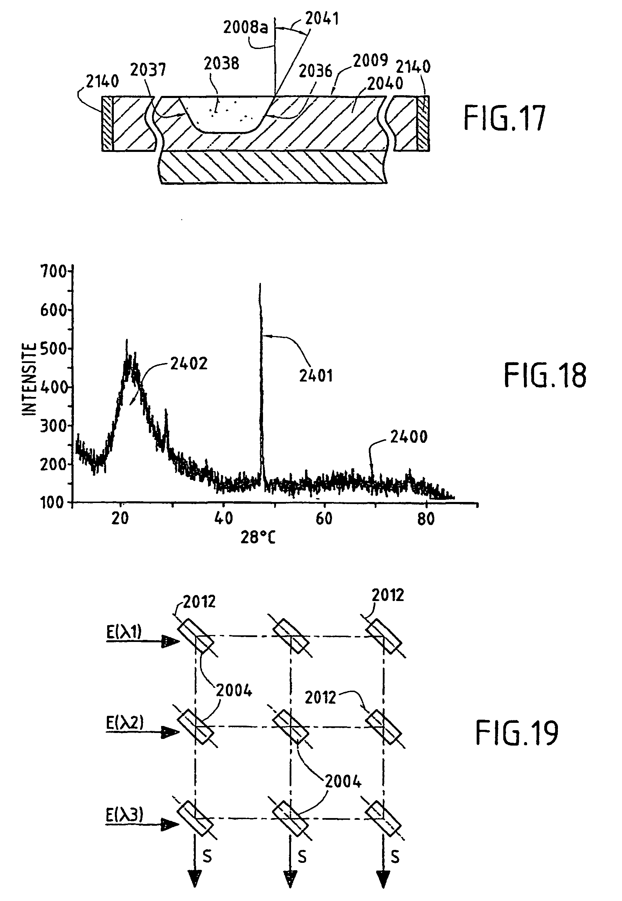

Par référence à la figure 17, les faces latérales (ou flancs) 2036, 2037 du motif 2038 d'un réseau formé sous la surface 2009 de la couche mince 2040, sont inclinées, par rapport à une normale 2008a à la surface 2009, d'un angle 2041 ; la couche mince active 2040 est munie sur deux portions de sa tranche de deux électrodes permettant l'application d'un champ électrique transversal dans la couche 2040.

Dans le répartiteur illustré figure 19, les neuf filtres 2004 réfléchissants s'étendent dans cinq plans parallèles et sont régulièrement espacés de sorte que leurs centres optiques sont disposés aux sommets d'un maillage carré.

Par référence à la figure 18, le spectre 2400 de diffraction comporte un pic 2401 révélant l'existence d'une structure cristalline dans la couche mince active ; le reste du spectre, incluant la bosse 2402, étant significatif d'une structure amorphe.

## Revendications

1. Composant optique de filtrage d'une longueur d'onde déterminée (3, 4, 1003, 1004) comportant au moins une couche (14,23,25,29,30,40) mince déposée sur un substrat (13,28), ainsi qu'une une structure ou un réseau résonnant(e) comportant une pluralité de motifs (15,16,31,32,38,63,65,67) formés dans ladite couche mince, **caractérisé en ce que** la structure ou réseau (60) résonnant(e)comporte :
- une pluralité de premiers motifs (15) ayant une première dimension ou une première configuration ionique commune à tous lesdits premiers motifs, lesquels premiers motifs sont régulièrement espacés selon deux directions différentes parallèles à ladite couche mince et selon un pas (62) inférieur à la longueur d'onde de filtrage,
- une pluralité de deuxièmes motifs (16) ayant une deuxième dimension ou une deuxième configuration ionique commune à tous lesdits deuxièmes motifs, lesquels deuxièmes motifs sont régulièrement espacés selon lesdites deux directions parallèles à ladite couche mince et selon un pas (62) identique au pas des premiers motifs d'espacement,
ladite deuxième dimension ou la deuxième configuration ionique étant différente de ladite première dimension ou configuration ionique,
de façon à former un filtre passe-bande en réflexion pour une incidence proche de la normale à ladite couche mince

2. Composant selon la revendication 1, dans lequel lesdits motifs sont gravés dans ladite couche mince.

3. Composant selon l'une quelconque des revendications 1 ou 2, qui comporte :
- un premier réseau (15,16,31,32,38) résonnant pluripériodique gravé ou implanté dans au moins une première couche mince,
- un deuxième réseau résonnant pluripériodique gravé ou implanté dans au moins une deuxième couche mince,
- au moins une troisième couche mince formant une première région de couplage et découplage associée au premier réseau.

4. Composant selon la revendication 3, qui comporte en outre :
- au moins une quatrième couche mince formant une deuxième région de couplage et découplage associée au deuxième réseau,
- au moins une couche épaisse formant ledit substrat.

5. Composant selon l'une quelconque des revendications 1 à 4, qui comporte deux structures ou réseaux résonnants disposés symétriquement par rapport à un plan (12,12b,12c) médian du composant, de façon à former un filtre (3) passe-bande en transmission.

6. Composant selon l'une quelconque des revendications 1 à 5, dans lequel lesdits motifs ont une section sensiblement circulaire ou carrée.

7. Composant selon l'une quelconque des revendications 1 à 6, dans lequel les motifs du réseau sont formés dans une couche mince externe dont l'indice est inférieur à celui de la couche supportant ladite couche mince externe.

8. Composant selon l'une quelconque des revendications 1 à 7, dont la structure résonnante comporte un réseau de plots (38) dont les faces (36,37) latérales sont inclinées.

9. Composant selon l'une quelconque des revendications 1 à 8, qui comporte au moins trois réseaux résonnants prévus dans trois couches minces (14,23,25) superposées.

10. Composant selon l'une quelconque des revendications 1 à 9, qui comporte moins de dix couches minces, en particulier une, deux ou trois couches minces associée(s) à chaque structure résonnante, et dont la bande passante est centrée sur une longueur d'onde voisine de 1,5 micron.

11. Composant selon l'une quelconque des revendications 1 ou 3 à 10, dans lequel lesdits motifs sont essentiellement constitués par des régions dopées de ladite couche mince.

12. Composant selon la revendication 11, dans lequel les profils transversaux d'indice (36, 37) desdits motifs sont Inclinés.

13. Multiplexeur ou démultiplexeur (1, 2) optique à division de longueur d'onde, qui comporte une pluralité de composants, en particulier de 8 ou 16 à 256 composants (3,4) selon l'une quelconque des revendications 1 à 12.

14. Multiplexeur ou démultiplexeur selon la revendication 13, dans lequel lesdits composants (3,4) sont mécaniquement solidaires les uns des autres, dont les longueurs d'onde centrale respectives sont différentes, qui s'étendent sensiblement parallèlement les uns aux autres, et qui comporte en outre un collimateur (11) associé à chaque composant (3,4), et le cas échéant un collimateur (5) ou guide d'onde adapté pour le couplage optique du multiplexeur ou démultiplexeur avec l'embout d'une fibre (6) optique.

15. Multiplexeur ou démultiplexeur selon la revendication 13 où 14, dans lequel lesdits composants formant des filtres en réflexion sont disposés alignés selon un axe (50) commun à tous les composants.

16. Multiplexeur ou démultiplexeur selon la revendication 13 ou 14, dans lequel lesdits composants formant des filtres en transmission sont disposés selon au moins deux plans (12b,12c) sensiblement parallèles entre eux.

17. Procédé de fabrication d'un composant selon l'une quelconque des revendications 1 à 12, dans lequel on dépose de 1 à 10 couches minces sur un substrat, et dans lequel on grave un réseau sur une couche mince par faisceau d'électrons ou par lithographie.

18. Procédé de fabrication d'un composant selon l'une quelconque des revendications 1 à 12, dans lequel on dépose de une à dix couches minces sur un substrat, et dans lequel on implante un réseau sur une couche mince par un faisceau d'ions délivré par un implanteur ionique.

19. Procédé selon la revendication 17 ou 18, dans lequel on empile et on assemble au moins deux composants dont les réseaux sont identiques.

20. Procédé selon l'une quelconque des revendications 17 à 19, dans lequel on ajuste la longueur d'onde centrale du filtre par dépôt d'une couche mince sur le réseau, ou par gravure.

21. Composant selon l'une quelconque des revendications 1 à 12, dans lequel au moins une couche mince est constituée d'un matériau non amorphe, de façon à former un filtre passe-bande actif.

22. Composant selon la revendication 21, dans lequel le matériau constituant la couche mince active est transparent aux longueurs d'onde de travail, en, particulier dans le domaine infrarouge.

23. Composant selon l'une quelconque des revendication 21 ou 22. dans lequel le matériau constituant la couche mince active est partiellement cristallin et doté de propriétés piézoélectriques et/ou photoélectriques, et est choisi parmi le groupe consistant en LiNbO₃, BaTiO₃, ZnO, Ta₂O₅, ITO modifié.

24. Composant selon l'une quelconque des revendications 21 à 23, dans lequel ledit réseau résonnant est formé dans ladite couche active (2014) qui est en contact électrique avec deux électrodes (2140).

25. Composant selon l'une quelconque des revendications 21 à 23, dans lequel ledit réseau résonnant est enserré entre deux couches actives (2200, 2201) qui sont chacune en contact avec une électrode (2300, 2301).

26. Dispositif optique à division de longueur d'onde, en particulier muitiolexeur ou démultiplexeur (1, 2) optique, qui comporte une pluralité de composants, en particulier de 8 ou 16 à 256 composants (2003, 2004) selon l'une quelconque des revendications 21 à 25, dans lequel lesdits composants (2003, 2004) sont mécaniquement solidaires les uns des autres, dont les longueurs d'onde centrale respectives sont de préférence différentes, et qui s'étendent sensiblement parallèlement les uns aux autres, et qui comporte en outre un moyen de collimation (11) associé à chaque composant (2003, 2004), et le cas échéant un moyen de collimation (5) ou guide d'onde adapté pour le couplage optique du dispositif avec l'embout d'une libre (6) optique.

27. Procédé de fabrication d'un composant selon l'une quelconque des revendications 21 à 25, dans lequel on réalise la couche mince active par dépôt d'un matériau à température élevée, en particulier à une température située dans une plage allant de 200°C à 900°C lorsqu'on utilise du Ta₂O₅, et/ou en utilisant un faisceau d'ions ou d'électrons dont l'énergie est suffisante pour provoquer un arrachement de structures cristallines.

## Patentansprüche

1. Optisches Bauteil zum Filtern einer bestimmten Wellenlänge (3, 4, 1003, 1004), umfassend mindestens eine dünne Schicht (14, 23, 25, 29, 30, 40), die auf einem Substrat (13, 28) abgeschieden ist, sowie eine resonierende Struktur oder ein resonierendes Gitter, die bzw. das eine Vielzahl von Motiven (15, 16, 31, 32, 38, 63, 65, 67) umfasst, die in der dünnen Schicht gebildet sind, **dadurch gekennzeichnet, dass** die resonierende Struktur oder das resonierende Gitter (60) umfasst:
- eine Vielzahl von ersten Motiven (15) mit einer ersten Abmessung oder einer ersten Ionenkonfiguration, die allen ersten Motiven gemeinsam ist, wobei die ersten Motive in zwei unterschiedlichen Richtungen, die parallel zur dünnen Schicht sind, und mit einem Schritt (62), der kleiner als die gefilterte Wellenlänge ist, regelmäßig voneinander beabstandet sind;
- eine Vielzahl von zweiten Motiven (16) mit einer zweiten Abmessung oder einer zweiten Ionenkonfiguration, die allen zweiten Motiven gemeinsam ist, wobei die zweiten Motive in den zwei Richtungen, die parallel zur dünnen Schicht sind, und mit einem Schritt (62), der identisch mit dem Schritt der ersten Abstandsmotive ist, regelmäßig voneinander beabstandet sind,
wobei sich die zweite Abmessung oder die zweite Ionenkonfiguration von der ersten Abmessung oder Ionenkonfiguration unterscheidet,
so dass ein Reflexions-Bandfilter für einen Einfall nahe der Normalen zur genannten dünnen Schicht gebildet wird.

2. Bauteil nach Anspruch 1, in dem die Motive in die dünne Schicht geätzt sind.

3. Bauteil nach einem der Ansprüche 1 oder 2, das umfasst:
- ein erstes mehrperiodisches resonierendes Gitter (15, 16, 31, 32, 38), das in mindestens eine erste dünne Schicht geätzt oder implantiert ist,
- ein zweites mehrperiodisches resonierendes Gitter, das in mindestens eine zweite dünne Schicht geätzt oder implantiert ist,
- mindestens eine dritte dünne Schicht, die einen ersten Kopplungs- und Entkopplungsbereich bildet, der dem ersten Gitter zugeordnet ist.

4. Bauteil nach Anspruch 3, das darüber hinaus umfasst:
- mindestens eine vierte dünne Schicht, die einen zweiten Kopplungs- und Entkopplungsbereich bildet, der dem zweiten Gitter zugeordnet ist,
- mindestens eine dicke Schicht, die das Substrat bildet.

5. Bauteil nach einem der Ansprüche 1 bis 4, das zwei resonierende Strukturen oder Gitter umfasst, die symmetrisch in Bezug auf eine Mittelebene (12, 12b, 12c) des Bauteils angeordnet sind, so dass ein Transmissions-Bandfilter (3) gebildet wird.

6. Bauteil nach einem der Ansprüche 1 bis 5, in dem die Motive einen annähernd kreisförmigen oder quadratischen Querschnitt haben.

7. Bauteil nach einem der Ansprüche 1 bis 6, in dem die Motive des Gitters in einer äußeren dünnen Schicht gebildet sind, deren Index kleiner ist als jener der Schicht, die die äußere dünne Schicht trägt.

8. Bauteil nach einem der Ansprüche 1 bis 7, dessen resonierende Struktur ein Gitter von Stufen (38) umfasst, deren Seitenflächen (36, 37) geneigt sind.

9. Bauteil nach einem der Ansprüche 1 bis 8, das mindestens drei resonierende Gitter umfasst, die in drei übereinandergelagerten dünnen Schichten (14, 23, 25) vorgesehen sind.

10. Bauteil nach einem der Ansprüche 1 bis 9, das weniger als zehn dünne Schichten umfasst, insbesondere eine, zwei oder drei dünne Schichten, die jeder resonierenden Struktur zugeordnet ist (sind) und deren Durchlassbereich auf eine Wellenlänge in der Nähe von 1,5 Mikron zentriert ist.

11. Bauteil nach einem der Ansprüche 1 oder 3 bis 10, in dem die Motive im Wesentlichen aus gedopten Bereichen der dünnen Schicht gebildet werden.

12. Bauteil nach Anspruch 11, in dem die transversalen Indexprofile (36, 37) der Motive geneigt sind.

13. Optischer Multiplexer oder Demultiplexer (1, 2) mit Wellenlängenteilung, der eine Vielzahl von Bauteilen umfasst, insbesondere von 8 oder 16 bis 256 Bauteile (3, 4) nach einem der Ansprüche 1 bis 12.

14. Multiplexer oder Demultiplexer nach Anspruch 13, in dem die Bauteile (3, 4) mechanisch miteinander verbunden sind, jeweils unterschiedliche zentrale Wellenlängen aufweisen und sich im Wesentlichen parallel zueinander erstrecken, und der darüber hinaus einen jedem Bauteil (3, 4) zugeordneten Kollimator (11) und gegebenenfalls einen Kollimator (5) oder Wellenleiter umfasst, der zur optischen Kopplung des Multiplexers oder Demultplexers mit dem Ansatz einer Lichtleitfaser (6) geeignet ist.

15. Multiplexer oder Demultiplexer nach Anspruch 13 oder 14, in dem die Bauteile, die Reflexionsfilter bilden, so angeordnet sind, dass sie nach einer allen Bauteilen gemeinsamen Achse (50) ausgerichtet sind.

16. Multiplexer oder Demultiplexer nach Anspruch 13 oder 14, in dem die Bauteile, die Transmissionsfilter bilden, in mindestens zwei Ebenen (12b, 12c) angeordnet sind, die im Wesentlichen parallel zueinander sind.

17. Verfahren zur Herstellung eines Bauteils gemäß einem der Ansprüche 1 bis 12, in dem eine bis zehn dünne Schichten auf einem Substrat abgeschieden werden und in dem ein Gitter durch einen Elektronenstrahl oder durch Lithographie auf eine dünne Schicht geätzt wird.

18. Verfahren zur Herstellung eines Bauteils gemäß einem der Ansprüche 1 bis 12, in dem eine bis zehn dünne Schichten auf einem Substrat abgeschieden werden und in dem ein Gitter durch einen Ionenstrahl, der von einem Ionenimplantator geliefert wird, auf einer dünnen Schicht implantiert wird.

19. Verfahren nach Anspruch 17 oder 18, bei dem mindestens zwei Bauteile, deren Gitter identisch sind, aufeinandergestapelt und miteinander verbunden werden.

20. Verfahren nach einem der Ansprüche 17 bis 19, bei dem die zentrale Wellenlänge des Filters durch Abscheiden einer dünnen Schicht auf dem Gitter oder durch Ätzen eingestellt wird.

21. Bauteil nach einem der Ansprüche 1 bis 12, in dem mindestens eine dünne Schicht aus einem nicht amorphen Material gebildet wird, um ein aktives Bandfilter zu bilden.

22. Bauteil nach Anspruch 21, in dem das Material, das die aktive dünne Schicht bildet, durchlässig für die Arbeitswellenlängen insbesondere im Infrarotbereich ist.

23. Bauteil nach einem der Ansprüche 21 oder 22, in dem das Material, das die aktive dünne Schicht bildet, teilweise kristallin und mit piezoelektrischen und/oder photoelektrischen Eigenschaften versehen ist und aus der Gruppe, bestehend aus LiNbO₃, BaTiO₃, ZnO, Ta₂O₅ und modifiziertem ITO, gewählt wird.

24. Bauteil nach einem der Ansprüche 21 bis 23, in dem das resonierende Gitter in der aktiven Schicht (2014) gebildet ist, die in elektrischem Kontakt mit zwei Elektroden (2140) ist.

25. Bauteil nach einem der Ansprüche 21 bis 23, in dem das resonierende Gitter zwischen zwei aktiven Schichten (2200, 2201) eingefügt ist, die jeweils in Kontakt mit einer Elektrode (2300, 2301) sind.

26. Optische Vorrichtung mit Wellenlängenteilung, insbesondere optischer Multiplexer oder Demultiplexer (1, 2), der eine Vielzahl von Bauteilen umfasst, insbesondere von 8 oder 16 bis 256 Bauteile (2003, 2004) nach einem der Ansprüche 21 bis 25, in dem die Bauteile (2003, 2004) mechanisch miteinander verbunden sind, vorzugsweise jeweils unterschiedliche zentrale Wellenlängen aufweisen und sich im Wesentlichen parallel zueinander erstrecken, und der darüber hinaus ein jedem Bauteil (2003, 2004) zugeordnetes Kollimationsmittel (11) und gegebenenfalls ein Kollimationsmittel (5) oder einen Wellenleiter umfasst, das bzw. der zur optischen Kopplung der Vorrichtung mit dem Ansatz einer Lichtleitfaser (6) geeignet ist.

27. Verfahren zur Herstellung eines Bauteils gemäß einem der Ansprüche 21 bis 25, bei dem die aktive dünne Schicht gebildet wird, indem ein Material bei hoher Temperatur aufgetragen wird, insbesondere bei einer Temperatur in einem Bereich von 200°C bis 900°C, wenn Ta₂O₅ verwendet wird, und/oder indem ein Ionen- oder Elektronenstrahl verwendet wird, dessen Energie ausreichend ist, um ein Ablösen von kristallinen Strukturen hervorzurufen.

## Claims

1. Optical component (3, 4, 1003, 1004) for filtering a defined wavelength, comprising at least one thin film (14, 23, 25, 29, 30, 40) deposited on a substrate (13, 28) and a resonant structure or grating comprising a plurality of features (15, 16, 31, 32, 38, 63, 65, 67) formed in the said thin film, **characterized in that** the resonant structure or grating (60) comprises:
- a plurality of first features (15) having a first dimension or first ionic configuration common to all the said first features, which first features are regularly spaced apart along two different directions parallel to the said thin film and with a spacing (62) smaller than the filtering wavelength;
- a plurality of second features (16) having a second dimension or a second ionic configuration common to all the said second features, which second features are regularly spaced apart along the said two directions parallel to the said thin film and with a spacing (62) identical to the spacing of the first spacing features,
the said second dimension or the second ionic configuration being different from the said first dimension or ionic configuration so as to form a band-pass filter operating in reflection for an angle of incidence close to the normal to the said thin film.

2. Component according to Claim 1, in which the said features are etched in the said thin film.

3. Component according to either of Claims 1 and 2, which comprises:
- a first multi-periodic resonant grating (15, 16, 31, 32, 38) etched or implanted in at least a first thin film;
- a multi-periodic second resonant grating etched or implanted in at least a second thin film; and
- at least a third thin film forming a first coupling/decoupling region associated with the first grating.

4. Component according to Claim 3, which further includes:
- at least a fourth thin film forming a second coupling/decoupling region associated with the second grating; and
- at least one thick film forming the said substrate.

5. Component according to any one of Claims 1 to 4, which comprises two resonant structures or gratings arranged symmetrically with respect to a mid-plane (12, 12b, 12c) of the component so as to form a band-pass filter (3) operating in transmission.

6. Component according to any one of Claims 1 to 5, in which the said features have an approximately circular or square cross section.

7. Component according to any one of Claims 1 to 6, in which the features of the grating are formed in an external thin film, the index of which is lower than that of the layer supporting the said external thin film.

8. Component according to any one of Claims 1 to 7, the resonant structure of which comprises a grating of studs (38) whose lateral faces (36, 37) are inclined.

9. Component according to any one of Claims 1 to 8, which comprises at least three resonant gratings provided in three superposed thin films (14, 23, 25).

10. Component according to any one of Claims 1 to 9, which comprises fewer than ten thin films, in particular one, two or three thin films, associated with each resonant structure, and the passband of which is centred on a wavelength close to 1.5 microns.

11. Component according to any one of Claims 1 or 3 to 10, in which the said features are essentially formed by doped regions of the said thin film.

12. Component according to Claim 11, in which the transverse index profiles (36, 37) of the said features are inclined.

13. Optical wavelength-division multiplexer or demultiplexer (1, 2), which comprises a plurality of components, in particular 8 or 16 to 256 components (3, 4) according to any one of Claims 1 to 12.

14. Multiplexer or demultiplexer according to Claim 13, in which the said components (3, 4) are mechanically fastened together, the respective central wavelengths of which are different, these components extending approximately parallel to one another, which component further includes a collimator (11) associated with each component (3, 4) and, where appropriate, a collimator (5) or waveguide designed to optically couple the multiplexer or demultiplexer to the end face of an optical fibre (6).

15. Multiplexer or demultiplexer according to Claim 13 or 14, in which the said components forming filters operating in reflection are placed so as to be aligned along an axis (50) common to all the components.

16. Multiplexer or demultiplexer according to Claim 13 or 14, in which the said components forming filters operating in transmission are arranged in at least two planes (12b, 12c) that are approximately parallel to each other.

17. Process for fabricating a component according to any one of Claims 1 to 12, in which from one to ten thin films are deposited on a substrate and in which a grating is etched on a thin film by an electron beam or by lithography.

18. Process for fabricating a component according to any one of Claims 1 to 12, in which from one to ten thin films are deposited on a substrate and in which a grating is implanted on a thin film by an ion beam delivered by an ion implanter.

19. Process according to Claim 17 or 18, in which at least two components having identical gratings are stacked and joined together.

20. Process according to any one of Claims 17 to 19, in which the central wavelength of the filter is adjusted by depositing a thin film on the grating, or by etching.

21. Component according to any one of Claims 1 to 12, in which at least one thin film is made of a non-amorphous material so as to form an active band-pass filter.

22. Component according to Claim 21, in which the material constituting the thin active film is transparent at the working wavelengths, in particular in the infrared range.

23. Component according to either of Claims 21 and 22, in which the constituent material of the thin active film is partially crystalline and has piezoelectric and/or photoelectric properties, and is selected from the group consisting of LiNbO₃, BaTiO₃, ZnO, Ta₂O₅ and modified ITO.

24. Component according to any one of Claims 21 to 23, in which the said resonant grating is formed in the said active film (2014), which is in electrical contact with two electrodes (2140).

25. Component according to any one of Claims 21 to 23, in which the said resonant grating is sandwiched between two active films (2200, 2201), each film being in contact with an electrode (2300, 2301).

26. Optical wavelength-division device, in particular an optical multiplexer or demultiplexer (1, 2), which comprises a plurality of components, in particular 8 or 16 to 256 components (2003, 2004) according to any one of Claims 21 to 25, in which the said components (2003, 2004) are mechanically fastened to each other, the respective central wavelengths of which are preferably different, and which lie approximately parallel to one another, which component further includes a collimation means (11) associated with each component (2003, 2004) and, where appropriate, a collimation means (5) or waveguide designed for optically coupling the device to the end face of an optical fibre (6).

27. Process for fabricating a component according to any one of Claims 21 to 25, in which the thin active film is produced by depositing a material at high temperature, in particular at a temperature lying within the range from 200°C to 900°C when Ta₂O₅ is used, and/or by using an ion beam or electron beam whose energy is sufficient to detach crystalline structures.
